Europäisches Patentamt

European Patent Office

Office européen des brevets

(19)

‖‖‖‖‖‖‖‖‖‖‖‖‖‖‖‖‖‖‖‖‖‖‖‖‖

(11) Numéro de publication : **0 342 757 B1**

(12) **FASCICULE DE BREVET EUROPEEN**

(45) Date de publication du fascicule du brevet :
**21.09.94 Bulletin 94/38**

(51) Int. Cl.[5] : **G01S 7/52,** G01S 15/89

(21) Numéro de dépôt : **89201233.7**

(22) Date de dépôt : **17.05.89**

(54) **Echographe ultrasonore à cohérence de phase contrôlable.**

(30) Priorité : **20.05.88 FR 8806789**

(43) Date de publication de la demande :
**23.11.89 Bulletin 89/47**

(45) Mention de la délivrance du brevet :
**21.09.94 Bulletin 94/38**

(84) Etats contractants désignés :
**BE DE FR GB IT SE**

(56) Documents cités :
**EP-A- 0 293 996**
**US-A- 4 005 382**
**US-A- 4 140 022**
**US-A- 4 180 790**
**US-A- 4 662 223**
**ULTRASONIC IMAGING, vol. 1, 1979, pages 303-324, New York, US; J.G. ABBOTT et al.: "Acoustic speckle theory and experimental analysis"**
**ULTRASONICS SYMPOSIUM PROCEEDINGS, Boston, MA, 5th-7th November 1980, pages 1073-1075, New York, US; H.E. MELTON, Jr.: "Parallel-focussing and speckle reduction in medical ultrasonic imaging"**
**ACOUSTICAL IMAGING, vol. 12, 1982, pages 621-634, New York, US; T. YOKOTA et al.: "3-D active incoherent ultrasonic imaging"**
**1978 ULTRASONICS SYMPOSIUM PROCEE-DINGS, Cherry Hill, New Jersey, 25th-27th September 1978, pages 220-224, New York, US; J.G. ABBOTT et al.: "Multi-scan proces-sing in a phased array imaging system"**
**ACOUSTICAL IMAGING, vol. 15, 1987, pages 481-486, New York, US; S. SINGH et al.: "A modified sum focussing approach to ultra-sonic speckle reduction"**

(73) Titulaire : **LABORATOIRES D'ELECTRONIQUE PHILIPS**
**3, Avenue Descartes**
**F-94450 Limeil-Brévannes (FR)**
(84) **FR**
Titulaire : **N.V. Philips' Gloeilampenfabrieken**
**Groenewoudseweg 1**
**NL-5621 BA Eindhoven (NL)**
(84) **BE DE GB SE**
Titulaire : **ETAT-FRANCAIS représenté par le DELEGUE GENERAL POUR L'ARMEMENT (DPAG)**
**Bureau des Brevets et Inventions de la Délégation Générale pour l'Armement**
**26, Boulevard Victor**
**F-75996 Paris Armées (FR)**
(84) **BE DE FR GB IT SE**

(72) Inventeur : **Fink, Mathias**
**Société Civile S.P.I.D.**
**156, bd. Haussmann**
**F-75008 Paris (FR)**
Inventeur : **Cancre, Fabrice**
**Société Civile S.P.I.D.**
**156, bd. Haussmann**
**F-75008 Paris (FR)**
Inventeur : **Pesque, Patrick**
**Société Civile S.P.I.D.**
**156, bd. Haussmann**
**F-75008 Paris (FR)**

(74) Mandataire : **Landousy, Christian et al**
**Société Civile S.P.I.D.**
**156, Boulevard Haussmann**
**F-75008 Paris (FR)**

# Description

La présente invention concerne un échographe ultrasonore comprenant au moins :

(a) un jeu de transducteurs ultrasonores ;

(b) un étage d'émission d'ondes ultrasonores vers un milieu à explorer ;

(c) un étage de réception et de traitement des signaux ultrasonores renvoyés par les obstacles rencontrés dans ledit milieu, comprenant lui-même n lignes à retard de focalisation et éventuellement d'angulation du faisceau, prévues en parallèle en sortie des n transducteurs ultrasonores qui sont affectés dans ledit jeu à la réception, un sommateur des signaux de sortie desdites lignes à retard, et un circuit de traitement par détection d'enveloppe puis visualisation et/ou mémorisation du signal résultant de ladite détection d'enveloppe. Les n transducteurs ultrasonores peuvent être disposés en un réseau unidimensionnel, en une matrice bidimensionnelle, ou en un réseau annulaire plan ou courbe avec ou sans fragmentation sectorielle.

Cette invention est applicable de façon particulièrement avantageuse dans le domaine médical et dans celui du contrôle non destructif de matériaux.

Dans le domaine médical, l'application peut être aussi bien qualitative, lorsque l'on recherche surtout à obtenir la formation d'images aussi exactes que possibles des milieux explorés et mettre notamment en évidence les contours d'organes et les parois spéculaires telles que des veines, que quantitative, lorsqu'on veut surtout caractériser de façon précise les tissus biologiques explorés en vue de leur étude pathologique, par exemple par la mesure précise de grandeurs telles que le paramètre d'atténuation des ondes ultrasonores dans les milieux explorés. De telles applications médicales sont décrites par exemple dans l'article "Electronique médicale : principe de l'imagerie à ultrasons et analyse quantitative en imagerie à ultrasons", paru dans la revue "Toute l'Electronique", n°497, octobre 1984, pp.31-37.

Dans le domaine du contrôle non destructif de matériaux, il s'agit également soit d'opérer des détections qualitatives de fissures ou de défauts quelconques à l'intérieur des matériaux, soit d'effectuer toute mesure quantitative intéressant le contrôle non destructif, là encore notamment par la mesure précise de paramètres liés au comportement local des ondes ultrasonores (par exemple par la mesure de l'atténuation ultrasonore). Les matériaux concernés sont alors aussi bien des matériaux réellement solides, tels que matériaux à grains ou à fibres, matériaux composites, céramiques, etc..., tous les multimatériaux en général, que des matériaux mous, tels que fromages, produits laitiers, viandes, et d'une façon générale tous ceux rencontrés notamment dans le domaine de l'agro-alimentaire.

L'article "Detection of spatially nonuniform ultrasonic radiation with phase sensitive piezoelectric and phase insensitive acoustoelectric receivers" de L.J. Busse et J.G. Miller, paru dans la revue Journal of Acoustical Society of America, 70(5), novembre 1981, pp.1377-1386, souligne l'importance de la notion de phase en matière de propagation et de détection d'ondes ultrasonores et démontre que l'utilisation de transducteurs insensibles à la phase instantanée desdites ondes peut conduire à des observations plus fiables, aussi bien en imagerie qualitative que lors de mesures quantitatives. Une telle constatation est effectuée par exemple à l'occasion de mesures d'atténuation en fonction de la fréquence, en étudiant pour des transducteurs récepteurs d'ouverture déterminée les variations de l'amplitude des ondes ultrasonores en fonction de la fréquence : cette amplitude décroît fortement et/ou s'annule autour de certaines fréquences. Il se produit en effet, à certaines fréquences et dans certaines situations, une compensation partielle ou totale des composantes du signal complexe étudié, alors que les variations locales de l'énergie ultrasonore détectée restent très limitées avec des transducteurs insensibles à la phase.

Les échographes ultrasonores utilisés à ce jour ne sont cependant pas équipés de structures transductrices insensibles à la phase et donc susceptibles de masquer les effets de la cohérence des ondes ultrasonores émises. La détermination qualitative de contours d'organes ou de la présence de défauts dans des matériaux (ou plus généralement de la présence de parois spéculaires fixes dans le milieu exploré) est donc perturbée par les interférences, constructives ou destructives, signalées plus haut, dues aux multidiffuseurs contenus dans le milieu étudié, et qui conduisent à des images entachées du défaut dit de "speckle", c'est-à-dire à l'aspect tavelé, ou granuleux. Par ailleurs, la mesure de paramètres acoustiques (tels que l'atténuation), qui résulte de l'analyse de signaux échographiques en provenance des multidiffuseurs répartis de façon aléatoire dans le milieu étudié, exige l'enregistrement d'un grand nombre de lignes échographiques décorrélées et donc le déplacement du transducteur pendant la mesure, ce qui réduit notablement la résolution spatiale. En outre, cette analyse des signaux échographiques est perturbée par la présence d'éventuels réflecteurs spéculaires dans le milieu, et il ne peut y être remédié que par une localisation précise de tels réflecteurs en vue de l'élimination ou de la réduction des effets de leur présence.

Le but de l'invention est donc de proposer un échographe ultrasonore grâce auquel on puisse aussi bien obtenir une image échographique améliorée du milieu examiné qu'effectuer des déterminations précises de paramètres acoustiques sans perte de résolution spatiale.

L'invention concerne à cet effet un échographe ultrasonore caractérisé en ce que ledit étage de réception comprend, entre lesdites n lignes à retard et ledit circuit de traitement, un sous-étage de retard comprenant lui-même N sous-ensembles de retard prévus pour superposer une loi de retards aléatoires à une loi de focalisation et éventuellement d'angulation imposée auxdits transducteurs affectés à la réception, ce sous-étage de retard étant suivi de N sommateurs des n signaux de sorties de chacun desdits sous-ensembles de retard.

La structure ainsi proposée permet, grâce aux N sous-ensembles de retard placés en parallèle en sortie des lignes à retard de focalisation, d'obtenir à la suite d'un seul tir N signaux de sortie ne présentant plus de cohérence entre eux du fait que chacun d'eux a subi dans le sous-ensemble de retard correspondant l'effet d'une loi de retards aléatoires distincte, indépendante des (N-1) autres, et donc de restituer par simple sommation, sans qu'il faille mémoriser des images successives correspondant à des tirs distincts, une image moyenne corrigée de l'effet de "speckle".

Le document "Multi-scan processing in a phased array imaging system", J.G. Abbott et F.L. Thurstone, 1978 Ultrasonics Symposium Proceedings, pp.220-224, décrit un échographe dans lequel une rupture de cohérence à la réception est obtenue par interposition, dans le trajet du faisceau des ondes ultrasonores, d'un disque ajoutant un retard aléatoire au retard de focalisation correspondant à chaque voie de réception. Il faut cependant, pour obtenir une image différente de la première quant à la cohérence des ondes, reprendre un deuxième tir avec des valeurs de retards aléatoires différentes, et ainsi de suite, ce qui contraint à stocker temporairement les images successivement obtenues à chaque tir, avant de pouvoir les ajouter pour pouvoir reconstituer une image moyenne dépourvue de speckle.

Pour un mode de réalisation particulièrement efficace de l'invention, l'échographe est de préférence caractérisé en ce que les valeurs desdits retards aléatoires sont réparties de manière aléatoire de telle façon que les variations de ces valeurs soient incluses dans un intervalle de temps correspondant au moins au temps de parcours d'une demi-longueur d'onde par les ondes ultrasonores dans le milieu examiné.

Dans une variante de réalisation, l'échographe selon l'invention est caractérisé en ce que les N sous-ensembles comprennent chacun n circuits d'inversion conditionnelle, reliés fil à fil aux n lignes à retard pour réaliser une loi d'inversion aléatoire de phase à deux états O ou Π qui constitue la loi de retards aléatoires à superposer à ladite loi de focalisation et éventuellement d'angulation. Cette loi de retards est plus simple que la précédente, de même que les circuits pour la mettre en oeuvre.

Dans un mode de réalisation avantageux, l'échographe selon l'invention est caractérisé en ce que ledit circuit de traitement comprend N détecteurs de l'enveloppe des signaux de sortie des N sommateurs, un sommateur d'enveloppes pour la sommation des N enveloppes ainsi constituées, et un sous-ensemble de visualisation et/ou de mémorisation. Cependant ce n'est pas là la seule réalisation possible, et, en particulier, dans le cas où l'on veut déterminer de façon quantitative des grandeurs telles que le paramètre d'atténuation dans les milieux explorés, ledit circuit de traitement des N signaux de sortie des N sommateurs comprend N circuits de définition d'une fenêtre temporelle glissante, N circuits de transformation de Fourier rapide, un additionneur des sorties respectives desdits circuits de transformation de Fourier, et une unité de traitement de détermination des paramètres liés à la puissance spectrale moyenne de sortie dudit additionneur et d'évaluation du paramètre d'atténuation $\beta$ des ondes ultrasonores dans le milieu exploré.

Dans le cas où cette détermination du paramètre d'atténuation est opérée à ou au voisinage d'une fréquence particulière F, ledit circuit de traitement des N signaux de sortie des N sommateurs comprend N filtres passe-bande, N détecteurs d'enveloppe, N amplificateurs logarithmiques et un circuit de mesure de pente et d'évaluation du paramètre d'atténuation $\beta$ des ondes ultrasonores dans le milieu exploré.

Ces réalisations de l'étage de réception et de traitement sont analogiques, mais peuvent aussi être proposées en version numérique. L'échographe selon l'invention est alors caractérisé en ce que des convertisseurs analogiques-numériques sont respectivement prévus entre la sortie des transducteurs et l'entrée des lignes à retard de focalisation et d'angulation, et en ce que les circuits prévus à la suite desdits convertisseurs sont numériques.

Dans les structures d'échographe ainsi proposées, l'effet technique essentiel est la rupture de la cohérence de phase des signaux échographiques traités correspondant aux ondes ultrasonores reçues par les transducteurs. En effet, les retards supplémentaires introduits à la réception sont aléatoires, c'est-à-dire que leurs valeurs représentent N réalisations d'un même processus stochastique déterminé par son intervalle de définition (cet intervalle est de l'ordre de la période acoustique) et par sa longueur de corrélation spatiale. En outre, ces retards sont choisis de telle façon que les signaux en sortie des différents sous-ensembles soient décorrélés. De la sorte, les enveloppes des N signaux sont différentes lorsque les échos proviennent d'un milieu multidiffuseur ou au contraire sensiblement identiques lorsque les échos proviennent d'un réflecteur spéculaire. Ainsi, le rapport signal sur bruit est accru et l'aspect granuleux de l'image, ou "speckle", est sensiblement réduit, tandis que l'information relative aux réflecteurs spéculaires est renforcée.

Dans la demande de brevet européen EP-0293996, non publiée à la date de dépôt de la présente demande, il avait déjà été proposé, plutôt que d'effectuer des mesures à l'aide de transducteurs rendus insensibles à la phase (comme ceux décrits dans l'article de L.J. Busse et J.G. Miller cité plus haut), c'est-à-dire rendus insensibles à la cohérence locale de phase des composantes d'un signal complexe, de rompre la cohérence des ondes ultrasonores en faisant appel à des moyens mécaniques mobiles pour réaliser cette opération. Plus précisément, la solution technique présentée dans ladite demande européenne consiste à associer à au moins un transducteur de la structure transductrice de l'échographe au moins un écran de phase aléatoire situé sur le trajet du faisceau ultrasonore de propagation. Cet écran est réalisé sous la forme d'une plaquette d'un matériau dont au moins une face présente une rugosité de granulométrie aléatoire, les dimensions des grains devant être suffisantes pour permettre d'obtenir des différences de phase allant jusqu'à l'inversion de phase, et est déplaçable par rapport au faisceau ultrasonore soit par rotation, soit par translation, soit par rotation et translation combinées.

Ainsi, dans le cas de cette précédente demande, en enregistrant une même ligne échographique pour différentes positions de l'écran de phase aléatoire, puis en sommant toutes les enveloppes correspondantes, les maxima desdites enveloppes liés aux réflecteurs spéculaires, situés toujours dans les mêmes positions, s'ajoutent linéairement, tandis que ceux liés aux multidiffuseurs dont la répartition dans le milieu examiné est, à l'opposé des réflecteurs spéculaires, tout à fait aléatoire, ne s'ajoutent que selon une croissance en racine carrée, l'amélioration du contraste des réflecteurs spéculaires étant donc de l'ordre de la racine carrée du nombre de positions distinctes de l'écran.

Cependant, le déplacement mécanique de l'écran de phase aléatoire ralentit d'autant plus la durée desdites mesures que le nombre de positions retenu est plus élevé. Bien que des dispositions puissent être prises pour réduire cette durée (par exemple, la mise en place de deux écrans de phase aléatoire mobiles l'un par rapport à l'autre, permettant de réduire l'écart de position entre deux positions de mesure successives), cette caractéristique inhérente au principe utilisé limite, dans la pratique, la cadence des mesures à une image par seconde approximativement. Les mesures en temps réel restent au contraire tout à fait possibles avec la structure d'échographe proposée dans la présente demande.

Les particularités et avantages de l'invention apparaîtront maintenant de façon plus précise dans la description qui suit et dans les dessins annexés, donnés à titre d'exemples non limitatifs et dans lesquels :

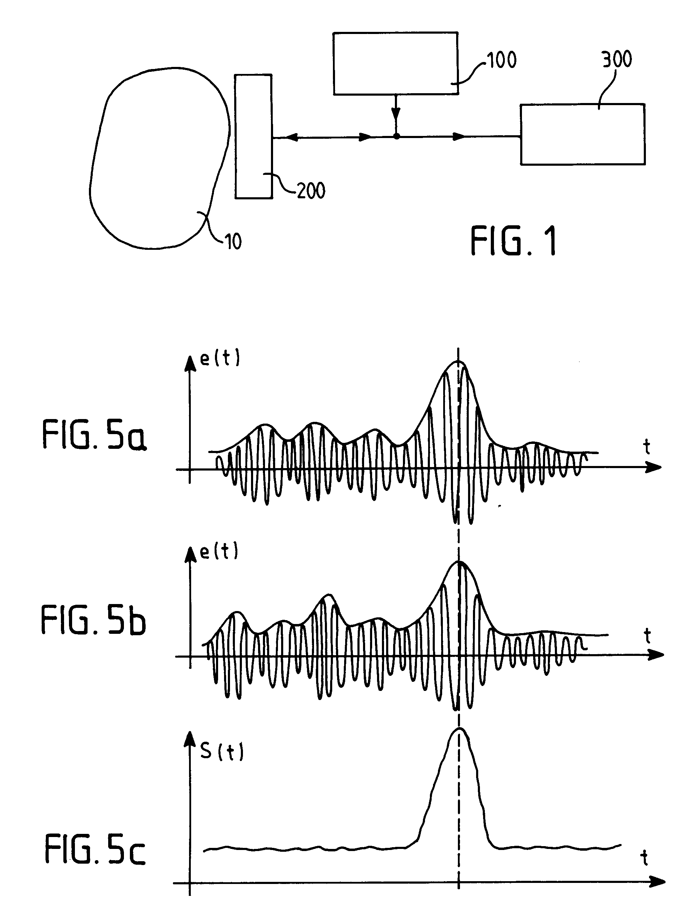

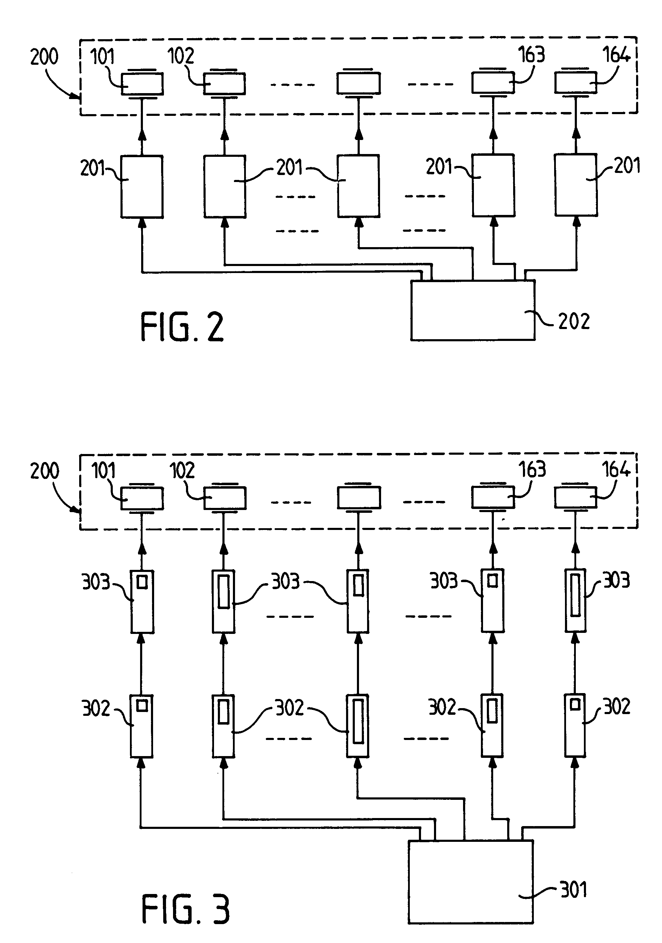

- la figure 1 montre le schéma d'ensemble d'un échographe ultrasonore selon l'invention, et les figures 2 et 3 deux exemples de réalisation de l'étage d'émission de cet échographe ;

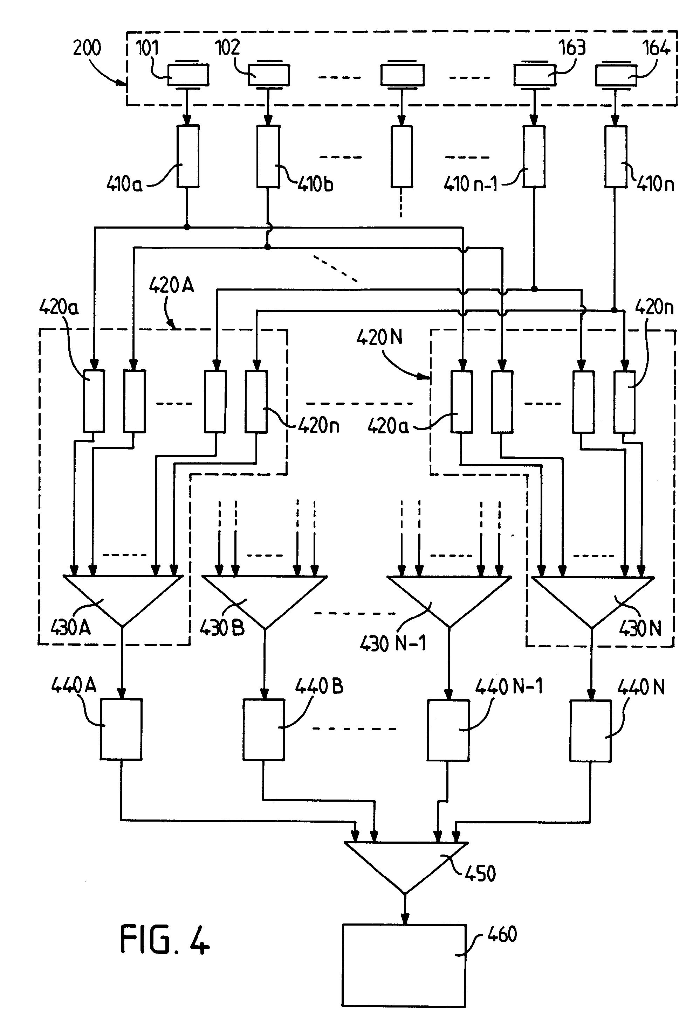

- la figure 4 montre un exemple de réalisation, dans ledit échographe, d'un étage de réception et de traitement conforme à l'invention ;

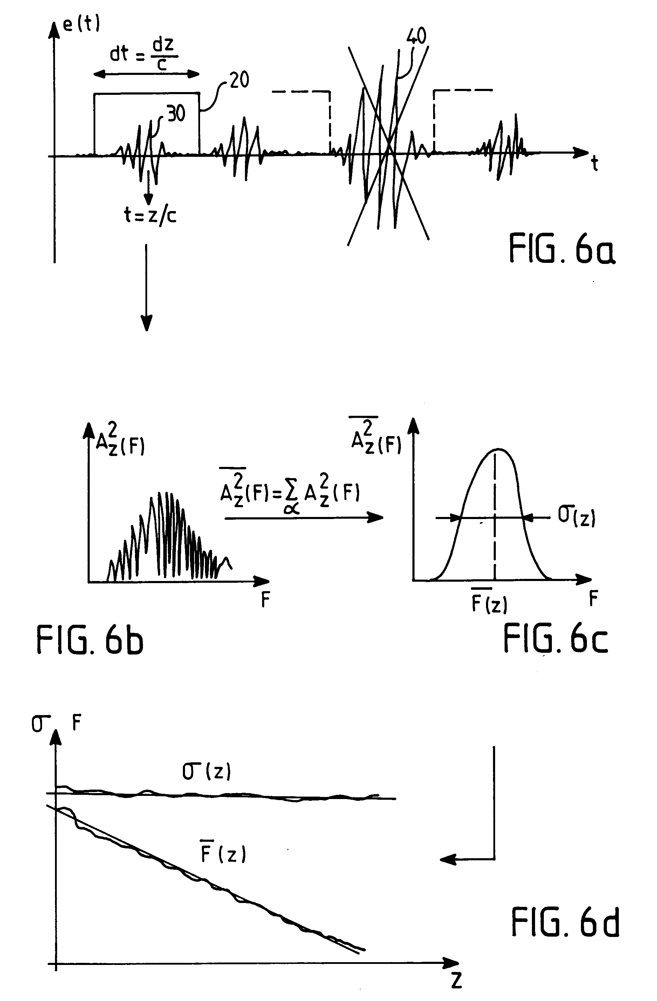

- les figures 5a, 5b, 5c permettent de comprendre comment l'information de position des réflecteurs spéculaires peut être extraite des lignes échographiques, dans la mise en oeuvre de l'échographe selon l'invention, lorsque celui-ci comprend un étage de réception et de traitement tel que celui de la figure 4 ;
- la figure 6a montre comment une ligne échographique peut être analysée à l'aide d'une fenêtre temporelle glissante, la figure 6b représente pour une ligne échographique la puissance spectrale en fonction de la fréquence F et met en évidence qu'il n'est pas possible de déduire du spectre ses moments principaux (largeur spectrale, fréquence centrale), ce spectre ayant en effet une apparence bruitée et contenant de nombreuses cannelures, la figure 6c représente la puissance spectrale moyenne lissée sur l'ensemble des lignes échographique, toujours en fonction de la fréquence, et la figure 6d montre l'évolution de la fréquence centrale $\overline{F}(z)$ et de la largeur spectrale $\sigma(z)$ de la puissance spectrale moyenne en fonction de la profondeur z ;

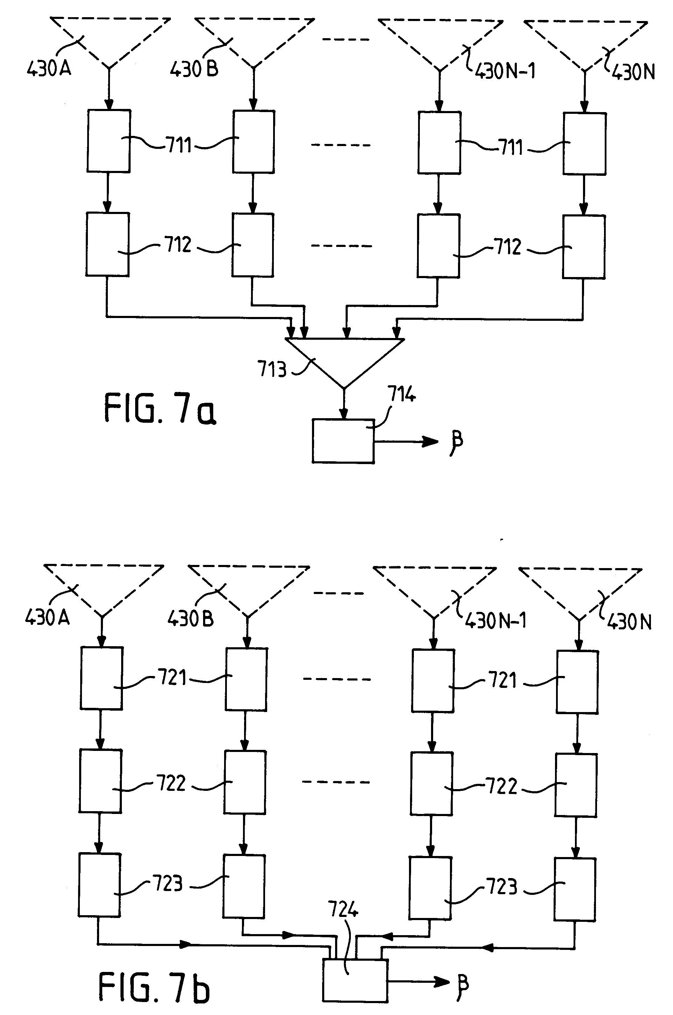

- les figures 7a et 7b correspondent respectivement à deux variantes de réalisation de l'étage de réception et de traitement de la figure 4, et, plus précisément, représentent les modifications dudit étage en aval des sommateurs des signaux de sortie des sous-ensembles de lignes à retard, lorsque cet étage est destiné à la détermination du paramètre $\beta$ d'atténuation des ondes ultrasonores dans le milieu exploré.

Un appareil d'exploration de milieux par échographie ultrasonore, ou échographe ultrasonore, comprend en général au moins un transducteur ultrasonore associé d'une part à un étage d'émission des ondes ultrasonores vers le milieu à explorer et d'autre part à un étage de réception et de traitement des échos ultrasonores renvoyés par les divers obstacles rencontrés par lesdites ondes ultrasonores dans le milieu exploré. Une telle structure d'échographe est classique et ne sera pas décrite en détail ici. On précisera seulement que la structure transductrice proprement dite peut, dans le cas présent, être un réseau unidimensionnel ou bidimensionnel de tels transducteurs ultrasonores, ou un réseau annulaire plan ou courbe (c'est-à-dire sensiblement en forme de coupelle sphérique, en vue d'une préfocalisation des ondes émises ou des signaux reçus) avec ou sans fragmentation sectorielle.

Dans l'exemple d'échographe décrit et schématiquement représenté sur la figure 1, un étage d'émission 100 commandant l'émission d'ondes ultrasonores vers un milieu 10 à explorer est relié à un jeu 200 de n transducteurs ultrasonores, n étant ici égal par exemple à 64, et les transducteurs correspondants étant ultérieurement désignés par les références 101 à 164. Ce même jeu de transducteurs utilisé à l'émission l'est ici également à la réception (mais on pourrait utiliser pour l'émission et la réception des structures transductrices distinctes), et est donc également relié à un étage 300 de réception et de traitement. L'étage 100 et l'étage 300 seront décrits en détail plus loin. On rappellera auparavant que le milieu 10 à explorer est un organe ou tissu biologique, ou bien un matériau, et que, dans ce milieu, peuvent être présents, essentiellement, aussi bien des réflecteurs dits spéculaires, de dimensions supérieures à la longueur d'onde des ondes ultrasonores et se comportant donc comme un miroir vis-à-vis de ces ondes, que des multidiffuseurs, obstacles nettement plus petits que ladite longueur d'onde et provoquant donc une dispersion diffuse des ondes ultrasonores, à peu près uniformément dans toutes les directions.

Dans le mode de réalisation représenté sur la figure 2, l'étage d'émission comprend, en amont de ceux des transducteurs qui sont affectés à l'émission (ce peut être éventuellement la totalité des n transducteurs 101 à 164), un nombre correspondant de générateurs 201 de signaux d'excitation desdits transducteurs affectés à l'émission. Ces générateurs 201 sont par ailleurs reliés à un circuit d'horloge 202 qui détermine les instants de déclenchement de chacun d'eux, éventuellement selon une loi de retards aléatoires si l'on veut modifier également la cohérence de phase des signaux ultrasonores qui vont être émis (le caractère aléatoire desdits retards doit être interprété dans le sens qui a été défini plus haut : différentes réalisations d'un même processus stochastique). Cette loi de retards aléatoires est superposée à la loi de focalisation et éventuellement d'angulation qui est en général imposée aux transducteurs affectés à l'émission. La mise en oeuvre de cette loi de retards est opérée en prévoyant dans le circuit d'horloge 202 un générateur de signaux impulsionnels et en effectuant le comptage de ces signaux. Le déclenchement des générateurs de signaux d'excitation 201 intervient alors pour certaines positions déterminées des signaux impulsionnels ainsi comptés, ces positions étant fixées en conformité avec la loi de retards aléatoires recherchée et la loi de focalisation et d'angulation à laquelle elle se superpose.

Une variante classique de réalisation de l'étage d'émission, représentée sur la figure 3, consiste à ne plus prévoir, dans le circuit de commande d'excitation des transducteurs affectés à l'émission, qu'un seul générateur 301 de signaux d'excitation, en sortie duquel sont alors prévues autant de voies en parallèle que de transducteurs affectés à l'émission. Ces voies en parallèle comprennent d'une part des lignes à retard 302, prévues pour retarder les signaux d'excitation des transducteurs selon la loi de focalisation et d'angulation imposée à ceux-ci, et d'autre part des lignes à retard 303, prévues pour superposer les retards complémentaires aléatoires qu'elles apportent à ceux des lignes 302, selon la loi de retards aléatoires qui se superpose à la loi de focalisation et d'angulation. Les lignes à retard 302 et 303 sont en série, ou éventuellement regroupées en un seul jeu de lignes à retard imposant dans chaque voie en parallèle le retard aléatoire respectif correspondant à la superposition des deux lois.

Dans le cas de la réalisation de la figure 3, on a mis en évidence, à titre explicatif, le rôle respectif des lignes à retard 302 et 303 en schématisant, à l'intérieur de la représentation de ces lignes, un segment proportionnel à l'importance du retard apporté par la ligne correspondante. On distingue ainsi le caractère coordonné des retards de focalisation (et d'angulation si le faisceau est oblique) apportés par les lignes 302 et le caractère aléatoire des retards complémentaires introduits par les lignes 303. Dans l'une ou l'autre des réalisations des figures 2 et 3, les valeurs de ces retards aléatoires complémentaires sont réparties de telle façon que les variations de ces valeurs soient incluses dans un intervalle de temps correspondant au moins au temps de parcours d'une demilongueur d'onde par les ondes ultrasonores dans le milieu examiné, mais ce choix n'est effectué qu'à titre d'exemple et ne constitue pas une limitation de l'invention.

Ayant ainsi précisé une structure possible de l'étage d'émission, par exemple selon l'un des deux modes de réalisation représentés sur les figures 2 et 3, on va décrire maintenant l'étage de réception et de traitement associé qui permet la mise en oeuvre de l'invention. Dans un premier mode de réalisation, représenté sur la figure 4 et avec lequel on peut utiliser pour la réception tout ou partie des transducteurs prévus (on supposera ici que les n transducteurs ultrasonores sont utilisés, et l'on considèrera que ce nombre est par exemple choisi égal à 64, sans que ce choix soit limitatif), cet étage de réception et de traitement, prévu en sortie des 64 transducteurs 101 à 164, comprend d'une part 64 (n dans le cas général) lignes à retard 410a à 410n, de même nature que les lignes 302 (figure 3) et assurant de façon classique la focalisation électronique à la réception, ainsi qu'éventuellement l'orientation (ou angulation) du faisceau de détection dans le cas d'un échographe à décalage de phase employant une structure transductrice dite barrette de phase (en anglais : phasedarray). On sait en effet qu'un échographe à décalage de phase prévoit la possibilité de faire varier électroniquement le retard associé à chaque transducteur individuel d'une barrette de phase, non seulement à l'émission pour diriger obliquement les ondes ultrasonores par rapport au plan de la barrette, mais aussi à la réception pour focaliser de façon dynamique les échos reçus obliquement.

Ces lignes à retard classiques sont suivies de N sous-ensembles de retard identiques 420A, 420B,..., 420N (ici N = 50 par exemple) comprenant chacun 64 (n dans le cas général) lignes à retard 420a à 420n. Seules les lignes à retard des sous-ensembles 420A et 420N, par exemple, ont été représentées sur la figure 4, mais elles sont bien entendu en nombre égal à N x n. Dans chaque sous-ensemble, les valeurs des retards des 64 (ou n) lignes à retard sont réparties de façon aléatoire, les variations de ces valeurs étant incluses dans un intervalle de temps correspondant au moins au temps de parcours d'une demi-longueur d'onde par les ondes utrasonores dans le milieu examiné. Chaque sous-ensemble 420A à 420N travaille en parallèle, et le choix des différents retards aléatoires de chacun d'entre eux est tel que les enveloppes des signaux présents en sortie de chaque sous-ensemble de retard ne sont pas corrélées entre elles.

Ces 50(ou N) sous-ensembles de retard en parallèle sont suivis de 50(ou N) sommateurs 430A à 430N réalisant chacun la sommation des 64 (ou n) signaux échographiques correspondants (ou signaux radiofréquence). Dans l'exemple de réalisation de la figure 4, la totalité des éléments situés en aval des sommateurs est constituée par un circuit de traitement qui comprend 50(ou N) détecteurs d'enveloppe 440A à 440N, puis un sommateur 450, qui additionne les 50(ou N) enveloppes provenant desdits détecteurs d'enveloppe, et un sous-ensemble de visualisation et/ou de mémorisation 460.

En sortie des 50(ou N) sommateurs 430A à 430N, on dispose donc des 50(ou N) signaux échographiques qui sont désormais décorrélés. Les figures 5a et 5b, qui représentent des exemples de signaux de sortie de deux des sommateurs 430A à 430N, montrent respectivement l'enregistrement d'une ligne échographique e(t) pour deux choix distincts des valeurs des retards aléatoires. On constate en sortie des détecteurs d'enveloppe correspondants que les maxima de l'enveloppe correspondante (représentée par commodité sur les mêmes figures que le signal à démoduler) associés à des réflecteurs spéculaires apparaissent dans les mêmes positions, ce qui n'est pas le cas pour ceux qui sont liés aux multidiffuseurs. La figure 5c montre le signal de sortie S(t) du sommateur 450 et met en évidence le fait que ce sommateur, en effectuant la moyenne des 50(ou N) signaux de sortie des détecteurs d'enveloppe 440A à 440N, atténue considérablement ou efface même la présence desdits maxima liés aux multidiffuseurs et donc lisse le grain de l'image, tout en conservant l'information relative aux réflecteurs spéculaires.

Dans l'exemple de réalisation de l'étage de réception et de traitement qui vient d'être décrit, on a donc obtenu une image échographique nettement améliorée du milieu examiné. Par un traitement différent des signaux échographiques, on peut aussi effectuer des mesures quantitatives précises de paramètres tel que le paramètre d'atténuation, appelé généralement β, des ondes ultrasonores dans le milieu exploré.

Ainsi que l'illustre la figure 6a, des lignes échographiques e(t) enregistrées pour une distribution donnée des valeurs des retards aléatoires sont analysées cumulativement à travers une fenêtre temporelle d'analyse 20 qui se déplace le long des lignes échographiques e(t). Cette fenêtre d'analyse 20 définit une zone temporelle de largeur dt correspondant à une épaisseur de tissus dz=c.dt. La détermination du paramètre d'atténuation repose sur l'analyse des échos 30 émis par les multidiffuseurs répartis dans le milieu 10 exploré. En ce sens, les zones de réflexion spéculaire 40 correspondent alors à des signaux parasites, contre lesquels le traitement précédemment décrit en liaison avec les figures 5a, 5b et 5c permet d'agir, en s'affranchissant de l'effet néfaste de ces zones : il suffit, pour cela, comme l'indique la figure 6a, de déplacer la fenêtre d'analyse 20 le long des lignes échographiques en évitant les zones de réflexion spéculaire, connues puisque parfaitement localisées dans les lignes échographiques.

Pour une position donnée de la fenêtre d'analyse 20 le long de la ligne échographique e(t), position caractérisée par le temps t, c'est à dire aussi par la profondeur z=ct/2, et pour une distribution donnée des valeurs des retards aléatoires, la puissance spectrale correspondante notée $A^2_z(F)$ et représentée en fonction de la fréquence F est, dans le cas de la figure 6b, calculée par transformation de Fourier. L'allure du spectre est en général très bruitée et difficilement exploitable en vue d'une détermination précise du paramètre d'atténuation, car ce spectre présente des cannelures dues à la présence de nombreux échos des multidiffuseurs situés dans la fenêtre d'exploration. Par contre, et c'est un avantage important de l'invention, lorsque l'on somme à l'intérieur de la même fenêtre d'analyse 20 les puissances spectrales élémentaires $A^2_z(F)$ disponibles en sortie des sommateurs 430A à 430N, on obtient une puissance spectrale moyenne $\overline{A}^2_z(F)$ lissée (figure 6c) de bien meilleure qualité, ne contenant plus de cannelures, et qui permet en particulier de déterminer avec une grande précision, pour chaque profondeur z, la fréquence centrale $\overline{F}(z)$ et la largeur spectrale $\sigma(z)$ de la puissance spectrale moyenne $\overline{A}^2_z(F)$. Connaissant les variations de $\overline{F}(z)$ et de $\sigma(z)$ avec z (figure 6d), on en déduit le paramètre d'atténuation β recherché à l'aide de la relation :

$$\frac{d\,\overline{F}(z)}{dz} = -2\beta\sigma^2(z)$$

Une autre méthode permettant de calculer $\overline{F}(z)$ et $\sigma(z)$ sans utiliser la technique, toujours lourde à mettre en oeuvre, de la transformation de Fourier consiste à déterminer la fréquence centrale $\overline{F}(z)$ à partir de la moyenne, pour une distribution donnée des retards aléatoires, du nombre de passages par zéro des lignes échographiques à l'intérieur de la fenêtre d'analyse 20 centrée sur t (ou z=ct/2). On sait en effet que ce nombre de passages par zéro est proportionnel à la fréquence centrale $\overline{F}(z)$. Quant à la largeur spectrale $\sigma(z)$, on peut tirer profit du fait qu'elle ne varie pratiquement pas avec la profondeur z en la calculant une fois pour toutes à partir de l'enregistrement d'échos sur un plan réflecteur du signal ultrasonore émis.

La figure 7 montre, selon deux variantes, les modifications de l'étage de réception et de traitement de la figure 4, en aval des sommateurs 430A à 430N, lorsque cet étage est destiné à la détermination du paramètre d'atténuation $\beta$. Selon la variante de la figure 7a, qui est en relation avec les figures 6a à 6d, les lignes échographiques e(t) sont analysées, pour chaque sous-ensemble 420A à 420N, à l'intérieur d'un circuit 711 de définition d'une fenêtre temporelle glissante. Les puissances spectrales élémentaires $A^2_z(F)$ sont ensuite calculées par un circuit 712 de transformation de Fourier rapide, puis sommées à l'aide d'un additionneur 713. Une unité de traitement 714 calcule ensuite les paramètres $\sigma(z)$ et $\overline{F}(z)$ de la puissance spectrale moyenne $\overline{A}^2_z(F)$ obtenue en sortie de l'additionneur 713, ce qui permet finalement de déduire $\beta$ des variations de $\sigma(t)$ et $\overline{F}(z)$ en fonction de z.

Selon la variante de la figure 7b, on cherche à mesurer l'atténuation à une fréquence particulière F. Pour celà, le signal échographique de sortie de chaque sous-ensemble est filtré à la fréquence F par un filtre passe-bande étroit 721 centré sur F. L'enveloppe moyenne de ce signal filtré est calculée par un détecteur d'enveloppe 722. L'enveloppe moyenne ainsi obtenue est une courbe exponentielle décroissante exp $(-\alpha(F)ct/2)$, où $\alpha(F)$ est l'atténuation pour une fréquence F. Un amplificateur logarithmique 723 transforme cette courbe exponentielle en une droite de pente $-\alpha(F)c/2$. En mesurant cette pente à l'aide d'une unité de calcul 724, qui effectue une régression linéaire et fournit ladite pente $-\alpha(F)c/2$ recherchée, on obtient l'atténuation $\alpha(F)$. En changeant la fréquence centrale F du filtre passe-bande 721, on peut étudier les variations de $\alpha(F)$ en fonction de F et en déduire $\beta$ par $\beta=\alpha(F)/F$.

Bien entendu, la présente invention n'est pas limitée à l'exemple de réalisation ci-dessus décrit et représenté, à partir duquel des variantes peuvent être proposées sans pour cela sortir du cadre de l'invention. En particulier, une réduction de coût notable peut être obtenue en remplaçant les lignes à retard 420a à 420n de chaque sous-ensemble -ou de l'un ou plusieurs d'entre eux au moins-par des circuits dits d'inversion conditionnelle. Ces circuits, qui ne comprennent que des inverseurs électroniques, et sont donc peu coûteux, multiplient les signaux de sortie des lignes à retard 410a à 410n soit par +1, soit par -1 (le choix est soit imposé à la construction de l'échographe, soit modifiable par voie mécanique ou électronique). Une telle version d'échographe permet d'obtenir une famille de codes pseudoaléatoires en +1 ou -1 dont les fonctions de corrélation sont identiques à celles obtenues dans le cas de lois de retards aléatoires.

La variante simplifiée qui vient d'être décrite utilise donc, si toutes les lignes à retard aléatoire sont remplacées par des circuits d'inversion conditionnelle, un nombre n x N de ces circuits d'inversion. Une nouvelle simplification peut être obtenue en réduisant le nombre de ces circuits, en ne prévoyant plus par exemple que n circuits d'inversion conditionnelle placés en sortie des n lignes à retard 410a à 410n et comprenant chacun deux voies en parallèle, l'une non inverseuse et l'autre fonctionnant en inverseur, les connexions entre les sorties desdites voies non inverseuses et inverseuses et les n entrées des sommateurs 430A à 430N correspondants étant alors établies par câblage en fonction de la loi de retard pseudoaléatoire que l'on veut obtenir et superposer à la loi de focalisation et d'angulation.

Par ailleurs, des valeurs particulières de n et de N ont été choisies dans l'exemple précédemment décrit, mais il est clair que ce choix n'est pas limitatif et que d'autres valeurs inférieures ou supérieures peuvent être retenues, la valeur de n étant, de préférence, une puissance de 2 telle que 32, 64, 128, etc... (les réalisations actuellement connues ne dépassent pas cependant n = 128).

D'autre part, la figure 4 montre un exemple de réalisation analogique de l'étage de réception et de traitement, mais la mise en oeuvre de l'invention peut être également proposée en version numérique, en prévoyant en sortie des n transducteurs 200, avant les n lignes à retard 410 de focalisation et d'angulation, n convertisseurs analogiques-numériques, les circuits prévus à la suite desdits convertisseurs étant alors similaires à ceux de la figure 4 mais maintenant numériques. Dans le mode de réalisation de la figure 4 proposé en version numérique, il faut également prévoir en sortie du sommateur d'enveloppes 450 un convertisseur numérique-analogique qui restitue des signaux analogiques au sous-ensemble 460 de visualisation et/ou de mémorisation.

## Revendications

1. Echographe ultrasonore comprenant au moins :
   (a) un jeu (200) de transducteurs ultrasonores ;
   (b) un étage (100) d'émission d'ondes ultrasonores vers un milieu à explorer (10) ;
   (c) un étage (300) de réception et de traitement des signaux ultrasonores renvoyés par les obstacles rencontrés dans ledit milieu, comprenant lui-même n lignes à retard (410a, 410b, ..., 410n) de focalisation et éventuellement d'angulation du faisceau, prévues en parallèle en sortie des n transducteurs ultrasonores qui sont affectés dans ledit jeu (200) à la réception, un sommateur des signaux de sortie desdites lignes à retard, et un circuit de traitement par détection d'enveloppe puis visualisation et/ou mémorisation du signal résultant de ladite détection d'enveloppe, caractérisé en ce que ledit étage de réception comprend, entre lesdites n lignes à retard et ledit circuit de traitement, un sous-étage de retard comprenant lui-même N sous-ensembles de retard (420A, 420B,..., 420N) prévus pour superposer une loi de retards aléatoires à une loi de focalisation et éventuellement d'angulation imposée auxdits transducteurs affectés à la réception, ce sous-étage de retard étant suivi de N sommateurs (430A, 430B,...430N) des n signaux de sorties de chacun desdits sous-ensembles de retard.

2. Echographe selon la revendication 1, caractérisé en ce que les valeurs desdits retards aléatoires sont réparties de manière aléatoire de telle façon que les variations de ces valeurs soient incluses dans un intervalle de temps correspondant au moins au temps de parcours d'une demi-longueur d'onde par les ondes ultrasonores dans le milieu examiné.

3. Echographe selon la revendication 1, caractérisé en ce que les N sous-ensembles (420A, 420B,.. 420N) comprennent chacun n circuits d'inversion conditionnelle, reliés fil à fil aux n lignes à retard (410) pour réaliser une loi d'inversion aléatoire de phase à deux états 0 ou $\Pi$ qui constitue la loi de retards aléatoires à superposer à ladite loi de focalisation et éventuellement d'angulation.

4. Echographe selon l'une des revendications 1 à 3, caractérisé en ce que ledit circuit de traitement comprend N détecteurs (440A, 440B,... 440N) de l'enveloppe des signaux de sortie des N sommateurs (430A à 430N), un sommateur d'enveloppes (450) pour la sommation des N enveloppes ainsi constituées, et un sous-ensemble (460) de visualisation et/ou de mémorisation.

5. Echographe selon l'une des revendications 1 à 3, caractérisé en ce que le circuit de traitement des N signaux de sortie des N sommateurs (430A, 430B,..., 430N) comprend N circuits (711) de définition d'une fenêtre temporelle glissante, N circuits (712) de transformation de Fourier rapide, un additionneur (713) des sorties respectives desdits circuits de transformation de Fourier, et une unité de traitement (714) de détermination des paramètres liés à la puissance spectrale moyenne de sortie dudit additionneur (713) et d'évaluation du paramètre d'atténuation β des ondes ultrasonores dans le milieu exploré.

6. Echographe selon l'une des revendications 1 à 3, caractérisé en ce que le circuit de traitement des N signaux de sortie des N sommateurs (430A, 430B,... 430N) comprend N filtres passe-bande (721), N détecteurs d'enveloppe (722), N amplificateurs logarithmiques (723) et un circuit (724) de mesure de pente et d'évaluation du paramètre d'atténuation β des ondes ultrasonores dans le milieu exploré.

7. Echographe selon l'une des revendications 1 à 6, 11, caractérisé en ce que des convertisseurs analogiques-numériques sont respectivement prévus entre la sortie des transducteurs (200) et l'entrée des lignes à retard (410) de focalisation et d'angulation, et en ce que les circuits prévus à la suite desdits convertisseurs sont numériques.

## Patentansprüche

1. Ultraschall-Echographiegerät mit wenigstens
   (a) einer Gruppe (200) von n Ultraschallwandlern,
   (b) einer Stufe (100) für die Emission von Ultraschallwellen nach einem zu untersuchenden Medium (10), und
   (c) einer Stufe (300) für den Empfang und für die Bearbeitung der von den im Mittel gefundenen Hindernissen zurückkehrenden Ultraschallsignale, das selbst n Fokussier- und ggf. Bündelablenk-Laufzeitleitungen (410a, 410b...410n) in Parallelschaltung am Ausgang der n Ultraschallwandler, die in der Empfangsgruppe (200) beeinflußt werden, einen Summierer für die Ausgangssignale der Laufzeitleitungen und eine Bearbeitungsschaltung für die Umhüllendendetektion mit anschließendem Visualisieren und/oder Speichern des durch die Umhüllendendetektion detektierten Signals enthält, dadurch gekennzeichnet, daß die Empfangsstufe zwischen den n Laufzeitleitungen und der Beabeitungsschaltung eine Laufzeit-Unterstufe mit selbst N Laufzeit-Untereinheiten (420A, 420B...420N) zum Überlagern eines beliebigen Laufzeitgesetzes auf einem Fokussierungs- und ggf. Ablenkgesetz auf den beim Empfang beeinflußten Wandlern enthält, wobei diese Laufzeit-Unterstufe den N Summierern (430A, 430B...430N) der n Ausgangssignale jeder der Laufzeit-Untereinheiten nachgeschaltet ist.

2. Echographiegerät nach Anspruch 1, _dadurch gekennzeichnet_, daß die Werte der beliebigen Laufzeiten derart willkürlich verteilt werden, daß die Änderungen dieser Werte in einem Zeitintervall entsprechend wenigstens dem Durchgangszeit einer Halbwellenlänge von den Ultraschallwellen im untersuchten Medium aufgenommen werden.

3. Echographiegerät nach Anspruch 1, _dadurch gekennzeichnet_, daß daß die N Untereinheiten (420A, 420B...420N) je n bedingte Umkehrschaltungen enthalten, die Draht für Draht mit n Laufzeitleitungen (410) verbunden sind, um ein Gesetz für die beliebige Phasendrehung in zwei Zustände 0 und $\pi$ zu verwirklichen, das das Gesetz beliebiger Laufzeiten zum Überlagern des Fokussier- und ggf. Ablenkgesetzes bildet.

4. Echographiegerät nach einem der Ansprüche 1 bis 3, _dadurch gekennzeichnet_, daß die Bearbeitungsschaltung N Detektoren (440A, 440B...440N) der Umhüllung der Ausgangssignale der N Summierer (430A bis 430N), einen Summierer (450) von Umhüllungen für die Summierung der auf diese Weise gebildeten N Umhüllungen und eine Visualisier- und/oder Speicher-Untereinheit (460) enthält.

5. Echographiegerät nach einem der Ansprüche 1 bis 3, _dadurch gekennzeichnet_, daß die Bearbeitungsschaltung der N Ausgangssignale der N Summierer (430A, 430B...430N) N Schaltungen (711) für die Definition eines zeitlichen gleitenden Fensters, N Schaltungen (712) für die schnelle Fourier-Transformation, einen Addierer (713) jeweiliger Ausgänge der Fourier-Transformationsschaltungen und eine Bearbeitungseinheit (714) zum Bestimmen von Parametern enthält, die mit der mittleren spektralen Ausgangsleistung des Addierers (713) und der Auswertung des Abschwächungsparameters $\beta$ der Ultraschallwellen im untersuchten Medium verknüpft sind.

6. Echographiegerät nach einem der Ansprüche 1 bis 3, _dadurch gekennzeichnet_, daß die Bearbeitungsschaltung der N Ausgangssignale der N Summierer (430A, 430B...430N) N Durchlaßfilter (721), N Umhüllungsdetektoren (722), N logarithmische Verstärker (723) und eine Schaltung (724) zum Messen der Flanke und der Auswertung des Abschwächungsparameters $\beta$ der Ultraschallwellen im untersuchten Medium enthält.

7. Echographiegerät nach einem der Ansprüche 1 bis 6, _dadurch gekennzeichnet_, daß Analog/Digital-Wandler zwischen dem Ausgang der Transduktoren (200) und dem Eingang der Fokussier- und Ablenklaufzeitleitungen (410) angeordnet sind, und daß die den Wandlern nachgeschalteten Schaltungen digital sind.

## Claims

1. An ultrasonic echograph, comprising at least:
   (a) a set (200) of ultrasonic transducers;
   (b) a stage (100) for the emission of ultrasonic waves towards a medium (10) to be explored;
   (c) a stage (300) for the reception and processing of the ultrasonic signals returned by the obstacles encountered in said medium, which state itself comprises n delay lines (410a, 410b, ..., 410n) for the focusing and possibly for the angulation of the beam which are provided in parallel at the output of the n ultrasonic transducers allocated in the set (200) to the reception, a summing device for the output signals of said delay lines, and a circuit for processing by envelope detection and subsequent display and/or storage of the signal resulting from said envelope detection, characterized in that said receiving stage comprises, between said n delay lines and said processing circuit, a delay sub-stage which itself comprises N delay sub-assemblies (420A, 420B, ..., 420N) for superposing a random delay rule on a focusing rule, and possibly an angulation rule, imposed on said transducers allocated to the reception, said delay sub-stage being succeeded by N summing devices (430A, 430B, ..., 430N) for the n output signals of each of said delay sub-assemblies.

2. An echograph as claimed in Claim 1, characterized in that the values of said random delays are distributed in a random fashion so that the variations of these values are included in a time interval which corresponds at least to the transit time of a half wavelength of the ultrasonic waves in the medium examined.

3. An echograph as claimed in Claim 1, characterized in that each of the N sub-assemblies (420A, 420B, ..., 420N) comprises n conditional inversion circuits which are wired to the n delay lines (410) in order to establish a rule for random inversion of phase with two states 0 or $\pi$, being the random delay rule to be superposed on said focusing rule and possibly the angulation rule.

4. An echograph as claimed in one of the Claims 1 to 3, characterized in that said processing circuit comprises N envelope detectors (440A, 440B, ...,

440N) for detecting the envelope of the output signals of the N summing devices (430A to 430N), an envelope summing device (450) for summing the N envelopes thus formed, and a sub-assembly (460) for display and/or storage.

5. An echograph as claimed in one of the Claims 1 to 3, characterized in that the circuit for processing the N output signals of the N summing devices (430A, 430B, ..., 430N) comprises N circuits (711) for defining a sliding time window, N fast Fourier transformation circuits (712), an adder (713) for the respective outputs of said Fourier transformation circuits, and a processing unit (714) for determining the parameters associated with the mean output spectral power of said adder (713) and for evaluating the attenuation parameter $\beta$ of the ultrasonic waves in the medium explored.

6. An echograph as claimed in one of the Claims 1 to 3, characterized in that the circuit for processing the N output signals of the N summing devices (430A, 430B, ..., 430N) comprises N bandpass filters (721), N envelope detectors (722), N logarithmic amplifiers (723), and a circuit (724) for measurement of slope and for evaluation of the attenuation parameter $\beta$ of the ultrasonic waves in the medium explored.

7. An echograph as claimed in one of the Claims 1 to 6, characterized in that respective analog-to-digital converters are provided between the output of the transducers (200) and the input of the focusing and angulation delay lines (410), and in that the circuits provided subsequent to said converters are digital.

FIG. 1

FIG. 5a

FIG. 5b

FIG. 5c

FIG. 2

FIG. 3

FIG. 4

FIG. 6a

FIG. 6b

FIG. 6c

FIG. 6d

430A  430 B  ---  430N-1  430N

711  711

712  712

713

FIG. 7a

714

β

430A  430B  ---  430N-1  430N

721  721

722  722

723  723

724

FIG. 7b

β